# EUROPÄISCHE PATENTSCHRIFT

(11) **EP 3 379 130 B1**
(45) Veröffentlichungstag und Bekanntmachung des Hinweises auf die Patenterteilung: **29.04.2020**
(21) Anmeldenummer: 18156049.1
(22) Anmeldetag: 09.02.2018
(51) Int. Cl.: F16L 47/10, F23J 13/04

(54) **KUNSTSTOFF-ABGASMUFFENROHR SOWIE HEIZUNGSSYSTEM**
PLASTIC EXHAUST GAS SLEEVE AND HEATING SYSTEM
TUYAU À EMBOÎTEMENT DE GAZ D'ÉCHAPPEMENT EN MATIÈRE PLASTIQUE ET SYSTÈME DE CHAUFFAGE

(30) Priorität: 22.03.2017 DE 102017106200
(43) Veröffentlichungstag der Anmeldung: 26.09.2018
(73) Patentinhaber: Bächle, Dieter, 8595 Altnau (CH)
(72) Erfinder: Bächle, Dieter, 8595 Altnau (CH)
(74) Vertreter: Patentanwälte Behrmann Wagner PartG mbB

(56) Entgegenhaltungen:
- CH-A5- 686 798
- US-A- 4 566 704
- US-A1- 2008 048 446

## Beschreibung

Die Erfindung betrifft ein bogenförmigen oder geradliniges Kunststoff-Abgasmuffenrohr für die Abgasleitung von Gebäudeheizungen gemäß dem Oberbegriff des Anspruchs 1, mit einem, bevorzugt als Kunststoffspritzgussteil ausgebildeten, Rohrkörper und einem endseitigen Muffenabschnitt zur Aufnahme eines Rohrabschnittes eines weiteren Abgasrohres zur Herstellung einer Abgasmuffenrohrverbindung, wobei in dem Muffenabschnitt eine als Lippendichtung ausgebildete Ringdichtung zur dichtenden Anlage am Außenumfang des in einer Einsteckrichtung in den Muffenabschnitt einsteckbaren Rohrabschnittes in einer einen von einem Nutgrundabschnitt des Rohrkörpers sowie eine erste und eine zweite sich winklig dazu erstreckenden Nutwand aufweisenden, nach radial innen offenen Innenumfangsnut aufgenommen ist, die entgegen der Einsteckrichtung von einem koaxial zum Rohrkörper angeordneten Steckring begrenzt ist, der mit dem Rohrkörper verrastet ist, wobei die erste Nutwand von einem ringförmigen Nutwandabschnitt des Steckrings gebildet ist.

Ferner betrifft die Erfindung ein Heizungssystem mit einem solchen Abgasmuffenrohr gemäß Anspruch 7. Außerdem betrifft die Erfindung ein Verfahren zur Herstellung eines Kunststoff-Abgasmuffenrohrs für die Abgasführung von Gebäudeheizungen gemäß dem Anspruch 8.

Abgasmuffenrohre aus Kunststoff zur Abgasführung weisen in der Regel einen endseitigen Muffenabschnitt zum Einstecken eines weiteren Abgasrohres auf. In dem Muffenabschnitt befindet sich zur Gewährleistung einer ausreichenden Dichtheit eine in der Regel als Lippendichtung ausgebildete Ringdichtung, die in einer Innenumfangsnut des Muffenabschnitts aufgenommen ist. Diese Innenumfangsnut wird in der Regel vollständig von einem einteiligen Rohrkörper des Muffenrohres gebildet. Diese Technologie hat sich bewährt - jedoch ist die Herstellung aufgrund der schwierigen Entformbarkeit im Kunststoffspritzgussverfahren aufwendig und aufgrund der hierfür notwendigen komplexen Werkzeuge kostenintensiv.

Ein alternatives Abgasmuffenrohr ist in der CH 686 798 A5 vorgeschlagen worden. Bei dem aus dieser Druckschrift bekannten Muffenrohr wird die Umfangsnut nicht ausschließlich von einem Rohrkörper des Muffenrohrs begrenzt, sondern axial entgegen einer Einsteckrichtung für ein aufzunehmendes Rohr von einem als Einsteckring ausgebildeten Steckring, der in dem Rohrkörper festgelegt und eine obere bzw. äußere Nutwand der Innenumfangsnut bildet. Das heißt der Montageaufwand für ein solches, mehrteiliges Abgasmuffenrohr ist höher - dieser Nachteil wird jedoch kompensiert durch die vereinfachte Fertigbarkeit im Kunststoffspritzgussverfahren, da das bekannte Muffenrohr axial auf einfache Weise entformbar ist. Die in der Praxis schlechte Zentrizität bzw. Rundheit des Einsteckrings verstärkt die Dichtheitsproblematik.

Auch aus der US 2008/0048446 A1 ist ein Muffenrohr mit einer Lippendichtung bekannt, wobei eine Lippendichtung in einem Muffenabschnitt des Muffenrohrs mit einem Steckring gesichert ist.

Auch die US 4,566,704 B offenbrat ein Muffenrohr mit Lippendichtung und Steckring zur Sicherung der Lippendichtung.

Nachteilig wird die axiale Baulänge des freien Endes des Abgasmuffenrohres axial benachbart zur Innenumfangsnut empfunden sowie die geringe Wandstärke des Abgasmuffenrohres radial außerhalb der Innenumfangsnut. Ferner scheint die Dichtwirkung verbesserungswürdig.

Aus der FR 1 520 687 ist ein Muffenrohr bekannt, umfassend einen Rohrkörper sowie einen in diesen einsetzbaren und mit dem Rohrkörper verrastbaren Einsteckring, der abschnittsweise einen Nutgrund einer Innenumfangsnut begrenzt, in welchem eine Ringdichtung aufgenommen ist, die sich in radialer Richtung nach außen sowohl am Rohrkörper als auch axial benachbart hierzu am Einsteckring abstützt. Da die Position des Einsteckrings nie exakt positioniert ist, sich die Ringdichtung jedoch in radialer Richtung am Einsteckring abstützt, kann dies negative Auswirkungen auf die Dichtwirkung aufweisen. Auch ist zumindest abschnittsweise die Wandstärke des Muffenrohres im Bereich des Nutgrundes der Innenumfangsnut gering. Insgesamt scheint die Dichtwirkung verbesserungswürdig.

Ausgehend von dem vorgenannten Stand der Technik liegt der Erfindung daher die Aufgabe zugrunde, ein einfach im Kunststoffspritzgussverfahren herstellbares, mehrteiliges Abgasmuffenrohr aus Kunststoff anzugeben, das sich durch eine gute Zentrizität des Steckrings sowie eine gute Dichtwirkung auszeichnet. Bevorzugt soll die axiale Baulänge des die Innenumfangsnut axial überragenden Abschnitts des Steckrings reduziert sein.

Ferner besteht die Aufgabe darin, ein Heizungssystem und eine Verfahren mit einem bzw. für ein entsprechend verbessertes Abgasmuffenrohr anzugeben.

Diese Aufgabe wird hinsichtlich des Kunststoff-Abgasmuffenrohres mit den Merkmalen des Anspruchs 1 gelöst
Hinsichtlich des Heizungssystems wird die Aufgabe mit den Merkmalen des Anspruchs 7 gelöst. Hinsichtlich des Verfahrens wird die Aufgabe mit den Merkmalen des Anspruchs 8 gelöst.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Der Erfindung liegt der Gedanke zugrunde, den Steckring als Aufsteckring auszubilden und hierzu zusätzlich zu seinem die Innenumfangsnut entgegen der Einsteckrichtung begrenzenden ringförmigen Nutwandabschnitt mit einem sich axial ausgehend vom Nutwandabschnitt in der Einsteckrichtung erstreckenden Umfangswandabschnitt zu versehen, der bei mit dem Rohrkörper verrasteten Steckring radial außerhalb des den Nutgrund begrenzenden Nutgrundabschnitts des Rohrkörpers angeordnet ist, so dass sich der Nutgrundabschnitt radial außen am ringförmigen Umfangswandabschnitt des Steckrings abstützen kann. Anders ausgedrückt umfasst der Steckring einen sich ausgehend vom Nutwandabschnitt axial in der Einsteckrichtung erstreckenden Umfangswandabschnitt der radial benachbart zum Nutwandabschnitt des Rohrkörpers, und zwar radial außerhalb von diesem angeordnet ist. Auf diese Weise ist es möglich, was in Weiterbildung der Erfindung mit Vorteil auch realisiert ist, dass der Nutgrund nicht von dem Steckring sondern vollständig bzw. ausschließlich von dem Rohrkörper, konkret von dessen Nutgrundabschnitt gebildet ist, wodurch sich also die Lippendichtung in radialer Richtung nach außen dann ausschließlich am Rohrkörper und nicht am Steckring abstützt. Aufgrund des Verzichts eines Übergangs im Bereich des Nutgrundes zwischen einer Anlage der Lippendichtung am Steckring und am Rohrkörper können Dichtheitsmängel vermieden werden. Darüber hinaus ist die Abgasmuffenrohrwand im Bereich des Nutgrundes aufgedoppelt, wodurch die Stabilität des Abgasmuffenrohres verbessert wird. Gleichzeitig kann sich der Nutgrundabschnitt des Rohrkörpers in radialer Richtung nach außen am Umfangswandabschnitt des Steckrings abstützen, wodurch die Zentrizität des Abgasmuffenrohres im Bereich der Innenumfangsdichtung verbessert wird, was wiederum zu einer verbesserten Dichtheit beiträgt. Ein weiterer Vorteil der erfindungsgemäßen Ausbildung und Anordnung des Steckrings besteht darin, dass beim Aufstecken des Steckrings die Lippendichtung keinen Scherkräften unterworfen wird, was der Fall wäre, wenn der Umfangsabschnitt nicht radial außerhalb sondern radial innerhalb des Nutgrundabschnittes des Rohrkörpers angeordnet wäre. Auch werden etwaige Rundheitsfehler des bevorzugt dünnwandigeren Steckrings aufgrund der Zentrierung über den Nutgrundabschnitt des Rohrkörpers ausgeglichen. Ein weiterer Vorteil besteht darin, dass der Steckring, insbesondere Umfangswandabschnitt und Rohrkörper, insbesondere Nutgrundabschnitt eine vergleichsweise lange Labyrinthdichtung bilden, die zur zusätzlichen Verbesserung der Dichtheit beiträgt. Besonders bevorzugt ist es, wenn der Nutwandabschnitt und Umfangswandabschnitt des Steckrings in einer axialen Längsschnittansicht durch den Steckring zumindest näherungsweise L-förmig konturiert sind. Insgesamt wird durch die Erfindung ein kostengünstig fertigbares, robustes und sich durch eine erhöhte Dichtheit auszeichnendes Kunststoff-Abgasmuffenrohr bereitgestellt. Auch kann die axiale Baulänge des Abgasmuffenrohres im Vergleich mit Stand der Technik-Lösungen reduziert werden.

Besonders zweckmäßig ist es nun, wenn der Steckring mit dem Rohrkörper im Bereich des Nutgrundabschnittes des Rohrkörpers verrastet ist, um hierdurch die axiale Baulänge weiter zu reduzieren. Auf diese Weise ist es nicht notwendig, axial benachbart zur Innenumfangsnut Verrastmittel vorzusehen, wodurch sich die Axialerstreckung des Abgasmuffenrohres im Bereich seines freien Endes erhöhen würde. Erreicht wird dies in Weiterbildung der Erfindung dadurch, dass Rastmittel des Steckrings, insbesondere radial innen, am Umfangswandabschnitt des Steckrings und Gegenrastmittel des Rohrkörpers, insbesondere radial außen, am Nutgrundabschnitt des Rohrkörpers angeordnet sind und dadurch der Umfangswandabschnitt mit dem Nutgrundabschnitt verrastbar bzw. im montierten Zustand verrastet ist.

Die Verrastung von Nutgrundabschnitt und Umfangswandabschnitt ermöglichen eine bevorzugte Ausführungsform mit minimierter Axialerstreckung, bei der der im Längsschnitt bevorzugt L-förmig konturierte Steckring das Abgasmuffenrohr mit einem Radialabschnitt begrenzt, der die eine axiale Nutwand der Innenumfangsnut ausbildet. Dabei bilden der Nutwandabschnitt und der Umfangswandabschnitt die senkrecht zueinander verlaufenden Schenkel des Ls. Hieran schließt bevorzugt in Richtung freies Ende des Abgasmuffenrohres, also entgegen der Einsteckrichtung kein zusätzlicher, sich winklig zu diesem Radialabschnitt erstreckende Axialabschnitt mehr an. Bevorzugt ist der Radialabschnitt des Steckrings an seinem Innenumfang mit einer Fase bzw. Einlaufschräge zum erleichternden Finden mittels eines in der Einsteckrichtung einzuschiebenden Abgasrohres angeordnet.

Um ein erleichtertes Aufstecken des Steckrings auf den Rohrabschnitt bzw. ein erleichtertes Finden des Rohrabschnitts zu ermöglichen, ist in Weiterbildung der Erfindung mit Vorteil vorgesehen, dass am axialen freien Ende des Rohrkörpers radial außen am Nutgrundabschnitt und/oder am axialen freien Ende des Steckrings radial innen am Umfangswandabschnitt eine Einlaufschräge ausgebildet sind/ist.

Die Verrastung zwischen dem Steckring und dem Rohrkörper im Bereich des Nutgrundabschnittes des Rohrkörpers ist erfindungsgemäß so auszugestalten, dass im verrasteten Zustand ein Presssitz zwischen dem Steckring und dem Rohrkörper im Bereich des Nutgrundabschnitts mit einer möglichst hohen Anpresskraft realisiert wird. Um einen solchen Presssitz zu erreichen, ist erfindungsgemäß vorgesehen, dass ein Innendurchmesser des ringförmigen Umfangswandabschnitts kleiner ist als ein Außendurchmesser des Nutgrundabschnitts, insbesondere abseits der Einlaufschrägen. In diesem Zusammenhang sei darauf hingewiesen, dass die Ausbildung des Umfangswandabschnitts mit einem kleineren Innendurchmesser als der Außendurchmesser des Nutgrundabschnitts zunächst zwar kontraintuitiv erscheint, da, abgesehen von Fertigungstoleranzen, mit dieser Ausgestaltung ein Aufstecken des Steckrings im Rahmen eines Steckvorgangs schwer oder unmöglich ist. Wie unten mit Bezug auf das erfindungsgemäße Verfahren noch detaillierter dargestellt werden wird, besteht ein besonders wünschenswerter verfahrenstechnischer Aspekt jedoch darin, den Steckring in einem, insbesondere fertigungsbedingten Erwärmungszustand mit dem Rohrkörper, insbesondere im Bereich des Nutgrundabschnitts zu verrasten, sodass im erwärmten Zustand, und damit während des Steckvorgangs der Steckring eine Expansion erfährt. Dadurch wird ermöglicht, dass der im erkalteten oder ausgekühlten Zustand schließlich kleiner ausfallende Innendurchmesser des ringförmigen Umfangswandabschnitts über den entsprechend größer ausfallenden Außendurchmesser des Nutgrundabschnitts im Rahmen des Steckvorgangs gesteckt und verrastet werden kann. Im Rahmen der Abkühlung des Steckrings wird dann der besonders hohe Anpressdruck und ein entsprechend starker Presssitz zwischen dem Steckring und dem Nutgrundabschnitt des Rohrkörpers erreicht. Außerdem wird dadurch vorteilhaft ermöglicht allgemeine Toleranzen, die im Rahmen der Fertigung der entsprechenden Teile auftreten zu kompensieren. Dies ist insbesondere bei Abgas-Muffenrohren mit großem Durchmesser, beispielsweise 250 mm, von besonderem Vorteil, da hier die sonstigen Fertigungstoleranzen entsprechend groß ausfallen und ohne die oben beschriebene Ausgestaltungsform viel Ausschuss produziert werden würde.

Wie erläutert wird die Innenumfangsnut in einer bevorzugten Ausführungsform nur in einer Axialrichtung, nämlich entgegen der Einsteckring von dem Steckring begrenzt. In die gegenüberliegende Axialrichtung wird die Innenumfangsnut bevorzugt begrenzt von einer inneren, die zweite Nutwand der Innenumfangsnut bildenden Ringschulter des Rohrkörpers.

Besonders vorteilhaft hat es sich im Hinblick auf die Stabilität und Verzugsfreiheit des Abgasmuffenrohres, insbesondere des Steckrings herausgestellt, wenn sich der Umfangwandabschnitt des Steckrings axial in der Einsteckrichtung zumindest näherungsweise bis zum axial nicht freien, d.h. in der Einsteckrichtung gelegenen Ende des Nutgrundabschnittes des Rohrkörpers erstreckt.

Dabei ist es bevorzugt, wenn das freie axiale Ende des Steckrings in axialer Richtung nicht frei vorsteht, sondern von einem bevorzugt vorgesehenen Ringbund am Rohrkörper verdeckt ist, der im Bereich des nicht freien, d.h. in der Einsteckrichtung gelegenen axialen Endes des Nutgrundabschnittes vorgesehen ist und sich dort nach radial außen erstreckt, und zwar bevorzugt bis zu einer radial äußeren Mantelfläche des Umfangswandabschnittes des Steckrings.

Zu Gewährleistung einer guten Dichtwirkung ist die in der Innenumfangsnut aufgenommene Ringdichtung als Lippendichtung ausgebildet und umfasst ein radial inneres Lippenprofil (8) zur radial äußeren Anlage an ein in den Muffenrohrabschnitt axial in der Einsteckrichtung einschiebbares Abgasrohr. Dieses radial innere Lippenprofil befindet sich an einer (radialen) Innenseite der Lippendichtung. Von dieser Innenseite abgewandt weist die Lippendichtung eine äußere, dem Nutgrund der Innenumfangsnut zugewandte Außenseite auf sowie eine erste, entgegen der Einsteckrichtung orientierte Axialseite sowie eine davon abgewandte, in die Einsteckrichtung weisende Axialseite, wobei die beiden Axialseiten einer ersten bzw. zweiten Nutwand (Nutseitenwand) zugewandt sind, wobei sich die Nutwände (Nutseitenwände) im Wesentlichen in radialer Richtung erstrecken.

Im Hinblick auf die Ausgestaltung des radial inneren Lippenprofils gibt es unterschiedliche Möglichkeiten. So ist es möglich, das radial innere Lippenprofil mit einer einzigen umlaufenden nach radial innen vorstehenden elastischen Dichtlippe auszubilden, die sich bevorzugt nach radial innen verjüngt. Bevorzugt ist jedoch eine Ausführungsform mit mehreren axial beabstandeten, d.h. nebeneinander angeordneten, umlaufenden elastischen Dichtlippen, die sich bevorzugt jeweils in radialer Richtung nach innen zur Anlage an einem einschiebbaren Abgasrohr verjüngen.

In Weiterbildung der Erfindung ist nun vorgesehen, dass die (monolithische) Lippendichtung nicht nur an ihrer radial inneren Seite (Innenseite) sondern zusätzlich an mindestens einer in axialer Richtung weisenden und sich im Wesentlichen radial erstreckenden Axialseite mit einem Lippenprofil, also mit mindestens einer umlaufenden Dichtlippe zur Anlage an der axial gegenüberliegenden Nutwand der Innenumfangsnut auszustatten. Wie erwähnt ist eine dieser Nutwände von dem Nutwandabschnitt des Steckrings und die andere von dem Rohrkörper, insbesondere einer inneren Ringschulter des Rohrkörpers gebildet. Durch das Vorsehen mindestens eines solchen, in axialer Richtung vorstehenden Lippenprofils zur dichtenden Wechselwirkung mit einer Nutwand (Nutseitenwand) wird mindestens eine zusätzliche Dichtbarriere geschaffen, die verhindert, dass Abgas, insbesondere nach einem Alterungsprozess der elastomeren Lippendichtung durch einen Bereich zwischen der Lippendichtung und der Innenumfangsnut hindurch, also unter Umgehung des radial inneren Lippendichtprofils nach außen strömen kann. Eine deutliche Verbesserung gegenüber bekannten Lösungen wird bereits dadurch erreicht, wenn ein solches zusätzliches axiales Lippenprofil nur an einer der beiden axialen und sich im Wesentlichen in radialer Richtung erstreckenden Seiten der Lippendichtung vorgesehen ist - besonders bevorzugt ist jedoch eine Variante mit Lippenprofilen an beiden Axialseiten, die in einander entgegengesetzte Axialrichtungen vorstehen.

Im Hinblick auf die Ausgestaltung des mindestens einen zusätzlichen axialen Lippenprofils gibt es unterschiedliche Möglichkeiten. So ist es denkbar, ein axiales Lippenprofil auszubilden durch das Vorsehen einer einzigen, elastomeren oder in axialer Richtung vorstehenden Dichtlippe, die sich ganz besonders bevorzugt in axialer Richtung hin zur jeweiligen Nutwand verjüngt. Alternativ ist es zur Erzielung einer noch besseren Dichtwirkung möglich und bevorzugt, wenn mindestens ein axiales Lippenprofil mehrere in radialer Richtung beabstandete, nebeneinander angeordnete Elastomere und in axialer Richtung vorstehende Dichtlippen aufweist, die sich bevorzugt in axialer Richtung hin zur gegenüberliegenden Nutwand (Nutseitenwand) verjüngen.

Für den Fall, dass mehr als eine Dichtlippe für das radial innere Lippenprofil vorgesehen werden, kann bevorzugt vorgesehen sein, dass der Durchmesser der jeweiligen Lippen unterschiedlich ausfällt. Beispielsweise kann eine oder mehrere Dichtlippen vorgesehen sein, deren Durchmesser zwischen 2/10 und 3/10 geringer ist als der Durchmesser der verbleibenden Dichtlippen. Auch kann für jede Dichtlippe ein eigener oder unterschiedlicher Durchmesser gewählt werden. Dadurch wird die Dichtwirkung der Lippendichtung positiv beeinflusst. Weiter kann über die unterschiedliche Ausgestaltung der Dichtlippen, insbesondere auch über unterschiedliche Durchmesser der Dichtlippen die Kraft eingestellt werden, die zur Aufnahme des Rohrabschnitts des weiteren Abgasrohres notwendig ist.

Zudem kann besonders vorteilhaft vorgesehen sein, dass die Dichtlippen im unverformten Zustand der Lippendichtung, also insbesondere vor der Aufnahme eines Rohrabschnitts eines weiteren Abgasrohrs sich nicht nur in radialer Richtung nach innen erstrecken, sondern auch eine Ausdehnungskomponente oder Erstreckung in Richtung der Einsteckrichtung aufweisen. Durch die derart in die Einsteckrichtung geneigten Dichtlippen kann einerseits ein Rohrabschnitt eines weiteren Abgasrohres leichter, also unter geringerem Kraftaufwand, aufgenommen werden. Gleichzeitig dienen die in der Einsteckrichtung ausgerichteten Dichtlippen des inneren Lippenprofils zur zusätzlichen Sicherung und Dichtung des Rohrabschnitts des weiteren Abgasrohres nach dessen Aufnahme in das Abgasmuffenrohr.

Um die Dichtwirkung der Lippendichtung sicherzustellen, ist es erforderlich, dass die Lippendichtung sowohl in radialer Richtung als auch in axialer Richtung einen Mindestanpressdruck an das Abgasmuffenrohr bzw. das weitere Abgasrohr mit dem Rohrabschnitt erfährt. Insbesondere in axialer Richtung soll die Anpresswirkung der Lippendichtung an das Abgasmuffenrohr bereits durch die Verrastung des Steckrings am Nutgrundabschnitt des Rohrkörpers erreicht werden. Um dies zu gewährleisten, sieht eine besonders vorteilhafte Ausführungsform des Abgasmuffenrohrs vor, dass die Höhe der Lippendichtung in axialer Richtung, insbesondere einschließlich des ersten und/oder zweiten axialen Lippenprofils, geringfügig größer ist, als eine Höhe des Nutgrundabschnitts. Die vorangehend beschriebenen Höhen, insbesondere die Höhe der Lippendichtung in axialer Richtung betrifft dabei die Höhe der Lippendichtung in einem entspannten, unverformten Zustand, also vor der Verrastung des Steckrings mit oder auf dem Nutgrundabschnitt. Durch eine geringfügig höhere Lippendichtung bzgl. der Höhe des Nutgrundabschnitts wird sichergestellt, dass beim Verrasten des Steckrings in axialer Richtung eine Verformung der Lippendichtung und gleichzeitig ein Anpressdruck der Lippendichtung an ihrer ersten Axialseite und ihrer zweiten Axialseite gegen das Abgasmuffenrohr erzeugt wird, die für eine entsprechende Dichtwirkung zwischen der Lippendichtung und dem Abgasmuffenrohr im Bereich der Axialseiten der Lippendichtung sorgen. Die vorangehend beschriebene Ausgestaltung mit einer in axialer Richtung geringfügig höher ausgebildeten Lippendichtung bzgl. der Höhe des Nutgrundabschnitts kann insbesondere dann besonders vorteilhaft vorgesehen sein, wenn im verrasteten Zustand des Steckrings der Nutwandabschnitt des Steckrings am freien Ende des Nutgrundabschnitts des Rohrkörpers zur Anlage kommt. Für den Fall, dass im verrasteten Zustand zwischen dem freien Ende des Nutgrundabschnitts und dem Nutwandabschnitt des Steckrings ein Abstand oder Spalt bestehen bleibt, kann die Höhe der Lippendichtung entsprechend vergrößert werden. Das bedeutet, dass in einer gleichermaßen vorteilhaften, jedoch noch allgemeineren vorteilhaften Ausführungsform vorgesehen sein kann, dass die Höhe der Lippendichtung in axialer Richtung, insbesondere einschließlich des ersten und/oder zweiten axialen Lippenprofils derart gewählt ist, dass im verrasteten Zustand des Steckrings an dem Nutgrundabschnitt des Rohrkörpers die Höhe der Lippendichtung in einem entspannten Zustand vor der Verrastung geringfügig größer gewählt wird als der Abstand zwischen dem Nutwandabschnitt des Steckrings und der zweiten Nutwand, welche vom Rohrkörper ausgebildet wird. In vorteilhafter Weise wird dadurch auf jeden Fall sichergestellt, dass in axialer Richtung die Dichtlippe einen Anpressdruck gegen das Abgasmuffenrohr erfährt und dementsprechend die Dichtwirkung gewährleistet wird.

Im Falle des Vorsehens eines axialen Lippenprofils ist es bevorzugt die gegenüberliegende Nutwand profilfrei, d.h. glatt auszugestalten.

Auch ist eine Ausführungsform realisierbar, bei der an der ersten und/oder der zweiten Nutwand ein einziger in die axial gegenüberliegende Axialseite der Lippendichtung einformbarer, der Lippendichtung elastisch deformierender oder im montierten Zustand eingeformter in axialer Richtung in die Innenumfangsnut hinein vorstehender, monolithisch mit der ersten bzw. zweiten Nutwand ausgebildeter Ringfortsatz ausgebildet ist oder alternativ mehrere in die erste bzw. zweite Axialseite der Lippendichtung einformbare oder eingeformte radial beabstandete und sich in axialer Richtung in die Innenumfangsnut hinein vorstehende Ringfortsätze angeordnet sind. Der mindestens eine Ringfortsatz ist bevorzugt aus einem starren Material bzw. starr ausgebildet um eine gute Dichtungspressung der Lippendichtung im Bereich der zugeordneten Axialseite zu ermöglichen. Denkbar ist die Kombination von mindestens einer derartig profilierten Nutwand mit einer mit einem axialen Lippenprofil versehenen Axialseite - bevorzugt ist es jedoch für den Fall des Vorsehens mindestens einer derartig profilierten, eine Dichtwirkung bewirkenden Nutwand die zugeordnete Axialseite der Lippendichtung profilfrei, d.h. glatt auszubilden.

Die Dichtwirkung kann auch weiter dadurch verbessert werden, dass zusätzlich zu dem radial inneren Lippenprofil und dem fakultativen, bevorzugt vorgesehenen mindestens einen axialen Lippenprofil noch ein radial äußeres Lippenprofil zur dichtenden Anlage am Nutgrund der Innenumfangsnut vorgesehen ist, also ein Lippenprofil mit mindestens einer sich in radialer Richtung nach außen erstreckenden elastischen Dichtlippe, die sich ganz besonders bevorzugt in radialer Richtung nach außen verjüngt.

Auch im Hinblick auf die Ausgestaltung des radial äußeren Lippenprofils gibt es mehrere Möglichkeiten. Grundsätzlich ist die Realisierung des radial äußeren Lippenprofils durch eine einzige in radialer Richtung nach außen weisende, umlaufende und elastische Dichtlippe möglich. Zur Verbesserung der Dichtwirkung ist es jedoch bevorzugt, mehrere in axialer Richtung beabstandete, d.h. nebeneinander angeordnete elastische und sich bevorzugt in radialer Richtung nach außen verjüngende Dichtlippen vorzusehen.

Besonders bevorzugt kann dabei vorgesehen sein, dass die unterschiedlichen Dichtlippen in radialer Richtung eine unterschiedliche Höhe bzw. einen unterschiedlichen Durchmesser aufweisen. Beispielsweise kann vorgesehen sein, dass eine Dichtlippe oder mehrere Dichtlippen einen um 2/10 bis 3/10 höheren Durchmesser aufweisen als die verbleibenden Dichtlippen. Auch eine unterschiedliche Ausgestaltung des Durchmessers der Dichtlippen für mehr als zwei der einzelnen Dichtlippen ist möglich. Durch eine unterschiedliche Bemessung der Durchmesser der Dichtlippen kann das Anpressverhalten an das Abgasmuffenrohr optimiert und dadurch die Dichtwirkung der Lippendichtung verbessert werden. Insbesondere kann auch die Dauerbelastung der Lippendichtung positiv beeinflusst werden, sodass die Lippendichtung auch nach einer langen Zeit, insbesondere nach einer Zeit von mindestens fünf Jahren eine sichere Dichtung gewährleistet und sich insbesondere nach dem Wegfall der entsprechenden mechanischen Belastungen sogar wieder in den Ursprungszustand zurückverformen würde.

Insbesondere für den Fall des Vorsehens mindestens einer nach radial außen vorstehenden Dichtlippe, also der Realisierung eines radial äußeren Lippenprofils ist es zur Gewährleistung einer guten Dichtwirkung bevorzugt, wenn der Nutgrund profilfrei, d.h. glatt ist.

Es ist auch hier eine Ausführungsform mit bewusst profiliertem Nutgrund realisierbar, insbesondere jedoch nicht zwingend, dann, wenn auf ein radial äußeres Lippenprofil der Lippendichtung verzichtet werden soll. Dieses Nutgrundprofil zeichnet sich aus durch mindestens einen nach radial innen vorstehenden und sich bevorzugt in radialer Richtung nach innen verjüngenden, monolithisch mit dem Muffenrohrabschnitt ausgebildeten Ringfortsatz, der insbesondere bei in dem Muffenrohrabschnitt eingeschobenem Kunststoffrohr bzw. Abgasmuffenrohr in die radiale Außenseite der Lippendichtung eingeformt ist, also die Dichtung von radial außen nach radial innen zur Erzielung einer Dichtwirkung presst. Der Ringfortsatz hat dabei bevorzugt die Kontur einer Dichtlippe, die jedoch im Gegensatz zu einer Dichtlippe bevorzugt nicht elastisch verformbar sondern zur Gewährleistung einer ausreichenden Dichtungspressung der Lippendichtung starr ausgebildet ist. Grundsätzlich ist es möglich einen einzigen solchen Ringfortsatz vorzusehen. Bevorzugt ist jedoch eine Ausführungsform mit mehreren axial beabstandeten, d.h. axial nebeneinander angeordneten Ringfortsätzen am Muffenrohrabschnitt zur Bildung bzw. Profilierung des Nutgrundes der Ringnut.

Für den Fall des Vorsehens mindestens eines solchen Ringfortsatzes ist es bevorzugt, wenn die Lippendichtung an ihrer radialen Außenseite profilfrei ist, d.h. kein Lippenprofil aufweist. Denkbar ist jedoch auch eine Kombination, insbesondere derart, dass ein solcher Ringfortsatz des Muffenrohrabschnittes an einem profilfreien Abschnitt der Außenseite der Lippendichtung angreift, während die Lippendichtung benachbart hierzu mit einem radial äußeren Lippenprofil versehen ist.

Denkbar ist auch, dass der mindestens eine Ringfortsatz die Lippendichtung in einem äußeren Lippenprofilbereich kontaktiert, insbesondere presst.

Wesentlich für die Eignung der monolithischen Lippendichtung für die Realisierung des erfindungsgemäßen Abgasmuffenrohres ist es, dass die Lippendichtung aus einem heizungsabgaskondensatbeständigen Elastomermaterial ausgebildet ist. Bevorzugt ist das Elastomermaterial auch temperaturstabil, insbesondere bis Temperaturen von mindestens 40°C, ganz besonders bevorzugt mindestens 60°C, noch weiter bevorzugt mindestens 80°C. Bevorzugt ist auch das Kunststoffmaterial des Abgasmuffenrohres heizungsabgaskondensatbeständig und/oder temperaturbeständig in einem zuvor angegebenen Wertebereich.

Die Erfindung führt auch auf ein Heizungssystem, welches sich neben einer Gebäudeheizung, insbesondere einer Gasheizung oder einer Ölheizung durch ein Abgasmuffenrohrsystem auszeichnet, welches mindestens ein erfindungsgemäßes Muffenrohr aufweist, in dessen Muffenrohrabschnitt ein weiteres Abgasrohr zur Herstellung einer Muffenverbindung eingeschoben ist. Dabei liegt die Lippendichtung, bevorzugt mit der mindestens einen Dichtlippe ihres bevorzugt vorgesehenen radial inneren Lippenprofils am Außenumfang dieses eingeschobenen Abgasrohres an. Gleichzeitig stützt sich die Lippendichtung in beide Axialrichtungen an jeweils einer Nutwand ab, wobei die erste, entgegen der Einsteckrichtung des Abgasrohres orientierte Nutwand von dem Steckring und die in der Einsteckrichtung gelegene Nutwand von dem Rohrkörper gebildet ist. Bevorzugt stützt sich die Lippendichtung in zumindest einer dieser beiden Axialrichtungen über ein axiales Lippenprofil an der jeweils gegenüberliegenden Nutwand ab. Ganz besonders bevorzugt stützt sich die Lippendichtung in radialer Richtung nach außen an dem, bevorzugt vollständig von dem Rohrkörper, nämlich von dessen Nutgrundabschnitt gebildeten Nutgrund mit einem radial äußeren Lippenprofil ab. Zusätzlich oder bevorzugt alternativ zu mindestens einem axialen Lippenprofil und/oder dem radial äußeren Lippenprofil kann in der entsprechend gegenüberliegenden Nutwand bzw. dem Nutgrund mindestens ein Ringprofilelement zum Einformen in die Lippendichtung, d.h. zur Pressung der Lippendichtung vorgesehen sein.

Zudem betrifft die vorliegende Erfindung ein Verfahren gemäß Anspruch 8 zur Herstellung eines Kunststoff-Abgasmuffenrohrs für die Abgasführung von Gebäudeheizungen mit einem, bevorzugt als Kunststoffspritzgussteil ausgebildeten Rohrkörper und einem endseitigen Muffenabschnitt zur Aufnahme eines Rohrabschnitts eines weiteren Abgasrohres zur Herstellung einer Abgasmuffenrohrverbindung, wobei in dem Muffenabschnitt eine als Lippendichtung ausgebildete Ringdichtung zur dichtenden Anlage am Außenumfang des in einer Einsteckrichtung in den Muffenabschnitt einsteckbaren Rohrabschnitts in einer einen von einem Nutgrundabschnitt des Rohrkörpers gebildeten Nutgrund sowie eine erste und eine zweite sich winklig dazu erstreckende Nutwand aufweisenden, nach radial innen offenen Innenumfangsnut aufgenommen wird, die entgegen der Einsteckrichtung von einem koaxial zum Rohrkörper aufgenommenen Steckring begrenzt ist, der mit dem Rohrkörper verrastet wird, wobei die erste Nutwand von einem ringförmigen Nutwandabschnitt des Steckrings gebildet wird, und wobei der Steckring ein sich axial zum Nutwandabschnitt erstreckenden, ringförmigen Umfangswandabschnitt umfasst, der zur Herstellung eines Kunststoffabgasmuffenrohrs mit dem Rohrkörper verrastet wird, sodass der Steckring radial außerhalb des den Nutgrund bildenden Nutgrundabschnitts des Rohrkörpers angeordnet wird und sich radial außen an dem Umfangswandabschnitt des Steckrings abstützt. Durch das erfindungsgemäße Verfahren wird ermöglicht, ein Abgasmuffenrohr bereitzustellen, was einerseits einfach und günstig herzustellen ist sowie eine hohe Zentrizität des Steckrings und eine gute Dichtwirkung ermöglicht. Außerdem werden die Vorteile erreicht, die oben bereits mit Bezug auf das erfindungsgemäße Abgasmuffenrohr beschrieben sind und auf welche an dieser Stelle Bezug genommen wird.

Es ist vorgesehen, dass Rastmittel des Steckrings, insbesondere radial innen am Umfangswandabschnitt des Steckrings und Gegenrastmittel des Rohrkörpers, insbesondere radial außen, am Nutgrundabschnitt des Rohrkörpers angeordnet sind und bei einem Steckvorgang des Steckrings gegenüber dem Rohrkörper der Umfangswandabschnitte mit dem Nutgrundabschnitt verrastet wird. Dadurch wird einerseits eine schnelle und sichere Fixierung der Lippendichtung im Abgasmuffenrohr gewährleistet, was wiederum zu einer schnellen und kostengünstigen Herstellung des Abgasmuffenrohrs führt. Darüber hinaus kann eine ausreichende Sicherung der Lippendichtung in der Innenumfangsnut gewährleistet werden, was wiederum eine besonders gute Dichtwirkung der Lippendichtung nach sich zieht. Weiterhin kann dadurch, wie oben auch bereits beschrieben, die axiale Baulänge weiter reduziert werden, da es nicht notwendig ist, axial benachbart zur Innenumfangsnut Verrastmittel vorzusehen, wodurch sich die Axialerstreckung des Abgasmuffenrohrs im Bereich seines freien Endes erhöhen würde.
Zudem kann gemäß einer besonders vorteilhaften Ausführungsform vorgesehen sein, dass am axialen freien Ende des Rohrkörpers radial außen am Nutgrundabschnitt und/oder am axialen freien Ende des Steckrings radial innen am Umfangswandabschnitt eine Einlaufschräge angeordnet ist/sind, sodass zu Beginn eines Steckvorgangs des Steckrings gegenüber dem Rohrkörper zum Aufstecken des Steckrings die Einlaufschräge oder die Einlaufschrägen ein Spiel zwischen Nutgrundabschnitt und Steckring insbesondere zwischen Nutgrundabschnitt und ringförmigen Umfangswandabschnitts, ausbilden. Dadurch wird in vorteilhafter Weise das Finden des Rohrabschnitts erleichtert.

Zudem ist beim erfindungsgemäßen Verfahren vorgesehen, dass ein Innendurchmesser des ringförmigen Umfangswandabschnitts kleiner ist, als ein Außendurchmesser des Nutgrundabschnitts, insbesondere abseits der möglicherweise vorgesehenen Einlaufschrägen, wobei der Steckring vor einem Steckvorgang des Steckrings gegenüber dem Rohrkörper, insbesondere fertigungsbedingt, erwärmt wird und der Steckvorgang im erwärmten Zustand durchgeführt wird. Durch diese Ausgestaltungsform des Verfahrens wird der Presssitz des Steckrings gegenüber dem Rohrkörper, insbesondere zwischen dem Nutgrundabschnitt und dem Steckring verbessert, da die fertigungsbedingte Erwärmung die an sich unvorteilhaft oder negativ gewählten Innendurchmesser des ringförmigen Umfangswandabschnitts und des Außendurchmessers des Nutgrundabschnitts dadurch kompensiert, dass die, bevorzugt fertigungsbedingte Erwärmung des Steckrings zu einer temporären Expansion/Aufweitung des ringförmigen Umfangswandabschnitts führt, sodass insbesondere im erwärmten Zustand des Steckrings die Verrastung des Steckrings ohne Weiteres auch trotz des verhältnismäßig zu gering dimensionierten Innendurchmessers des Umfangswandabschnitts möglich wird. Weiter ist besonders vorteilhaft, dass im Rahmen einer Abkühlung des Steckrings nach der Herstellung der Verrastung im erwärmten Zustand des Steckrings dieser wieder eine entsprechende Schrumpfung erfährt, sodass die Verrastungswirkung verbessert und darüber hinaus ein hervorragender Presssitz zwischen dem Steckring und dem Nutgrundabschnitt erreicht wird.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1a bis Fig. 1g:: Teilansichten eines ersten, nach dem Konzept der Erfindung ausgebildeten Ausführungsbeispiels eines Kunststoff-Abgasmuffenrohres mit Rohrkörper und Steckring,
- Fig. 2a bis Fig. 2f:: ein alternatives nach dem Konzept der Erfindung ausgebildetes Ausführungsbeispiel eines Kunststoff-Abgasmuffenrohres,
- Fig. 3:: ein drittes nach dem Konzept der Erfindung ausgebildetes Ausführungsbeispiel eines Kunststoff-Abgasmuffenrohres, und
- Fig. 4:: ein nach dem Konzept der Erfindung ausgebildetes Ausführungsbeispiel einer Lippendichtung.

In den Figuren sind gleiche Elemente und Elemente mit der gleichen Funktion mit den gleichen Bezugszeichen gekennzeichnet.

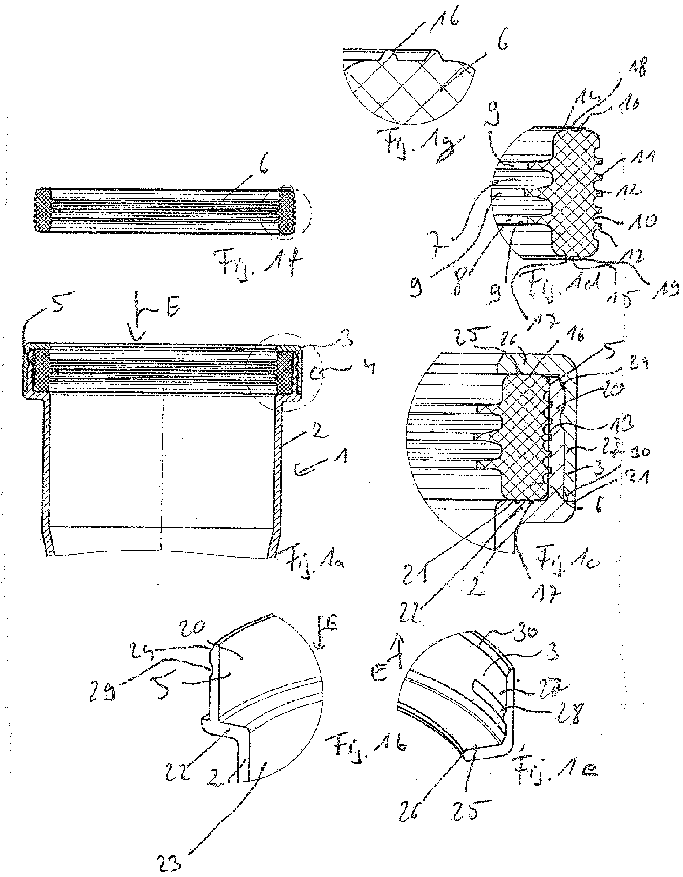

In den Fig. 1a bis 1g ist ein erstes Ausführungsbeispiel eines nach dem Konzept der Erfindung ausgebildeten Kunststoff-Abgasmuffenrohres 1 bzw. von Komponenten davon gezeigt. Das Abgasmuffenrohr umfasst einen vorliegend im Kunststoffspritzgussverfahren hergestellten Rohrkörper 2 sowie einen als Aufsteckring ausgebildeten Steckring 3, der mit dem Rohrkörper 2 verrastet ist. Der Steckring 3 ist im Längsschnitt L-förmig ausgestaltet und begrenzt in einem endseitigen Muffenabschnitt 4 des Abgasmuffenrohres 1 eine nach radial innen offene Innenumfangsnut 5, in der eine in Fig. 1f in Alleindarstellung gezeigte, monolithische, ringförmige, elastomere Lippendichtung 6 aufgenommen ist.

In den Muffenabschnitt 4 des Abgasmuffenrohres 1 ist ein nicht gezeigtes weiteres Abgasrohr in einer Einsteckrichtung E einsteckbar.

Die Lippendichtung 6 weist auf eine nach radial innen weisenden Innenseite 7 ein inneres Lippenprofil 8 auf, vorliegend mit drei umfangsgeschlossenen, ringförmigen und in axialer Richtung beabstandeten sowie sich nach radial innen verjüngenden Dichtlippen 9 zur radial äußeren Anlage an dem in der Einsteckrichtung E einzusteckenden Abgasrohr.

Davon abgewandt weist die Lippendichtung 6 radial außen eine Außenseite 10 auf, die mit einem radial äußeren Lippenprofil 11 ausgestattet ist. Dieses umfasst im vorliegenden Ausführungsbeispiel eine Mehrzahl von in axialer Richtung beabstandeten, umfangsgeschlossenen und sich in radialer Richtung nach außen verjüngenden, elastischen Dichtlippen 12. Diese dienen zur radial inneren Anlage an einem Nutgrund 13 der Innenumfangsnut 5.

Senkrecht zu der Innenseite 7 und der Außenseite 10 erstrecken sich eine erste und eine zweite Axialseite 14, 15 der Lippendichtung 6, die mit einem ersten bzw. zweiten axialen Lippenprofil 16, 17 versehen sind. Das erste axiale Lippenprofil 16 umfasst in dem gezeigten Ausführungsbeispiel zwei in radialer Richtung beabstandete, umfangsgeschlossene und sich entgegen der Einsteckrichtung E verjüngende Dichtlippen 18. Das zweite axiale Lippenprofil 17 umfasst in analoger Weise zwei radial beabstandete, umlaufende, elastische und sich in der Einsteckrichtung E verjüngende Dichtlippen 19.

Aus einer Zusammenschau der Fig. 1a, 1b, 1c und 1e ist der Aufbau der Innenumfangsnut 5 ersichtlich. Der Nutgrund 5 wird ausschließlich gebildet von einem ringförmigen, endseitigen und axial vorstehenden Nutgrundabschnitt 20 des Rohrkörpers 2. Eine zweite, in der Einsteckrichtung E gelegene Nutwand 21 wird gebildet von einer inneren Ringschulter 22 des Rohrkörpers 2, die sich ausgehend von einem glatten, axialen Anlageabschnitt 23 für ein einzusteckendes Abgasrohr in radialer Richtung nach außen erstreckt und dann in axialer Richtung entgegen der Einsteckrichtung E übergeht in den Nutgrundabschnitt 20. Am Nutgrundabschnitt 20 bzw. in seinem in der entgegen der Einsteckrichtung E gelegenen Ende ist eine Einlaufschräge 24 vorgesehen, um den Steckring 3 erleichtert aufschieben zu können.
Der zweiten Nutwand 21 gegenüber liegt eine erste Nutwand 25, die von dem einen Nutwandabschnitt 26 des Steckrings 3 gebildet ist, wobei sich der Nutwandabschnitt 26 in radialer Richtung erstreckt und das Abgasmuffenrohr 1 entgegen der Einsteckrichtung E begrenzt. Im Wesentlichen senkrecht zum Nutwandabschnitt 26 erstreckt sich ein Umfangswandabschnitt 27 des Steckrings 3, wobei der Umfangswandabschnitt 27 an seiner radial inneren Seite Gegenrastmittel 28 aufweist zum Verrasten mit radial innen gegenüberliegenden und am Außenumfang des Nutgrundabschnitts 20 vorgesehenen Rastmitteln 29 des Rohrkörpers 2. Der Steckring 3 ist so ausgebildet, dass er durch axiales Aufschieben auf den Rohrkörper mit diesem verschnappt.

Dabei ist ein Innendurchmesser des ringförmigen Umfangswandabschnitts 27 kleiner als ein Außendurchmesser des Nutgrundabschnitts 20. In dieser Ausgestaltungsform wird der Steckring 3 in einem, bevorzugt herstellungs- oder fertigungstechnisch bedingen Erwärmungszustand auf den Rohrkörper 2 aufgesteckt und mit diesem verschnappt. Im Erwärmungszustand ist der Umfangswandabschnitt 27 durch eine thermische Expansion aufgeweitet und der Innendurchmesser gleichgroß oder geringfügig größer als der Außendurchmesser des Nutgrundabschnitts 20. Im Rahmen des Erkaltens des Steckrings 3 schrumpft der Steckring 3, insbesondere der ringförmige Umfangswandabschnitt 27 auf einen kleineren Innendurchmesser als der Außendurchmesser des Nutgrundabschnitts 20. Dadurch wird ein besonders sicherer Presssitz erreicht. Mit anderen Worten ausgedrückt bedeutet dies, dass der kleiner ausgestaltete Innendurchmesser des Umfangswandabschnitts gegenüber dem Außendurchmesser des Nutgrundabschnitts den Endzustand oder den erkalteten Zustand des Steckrings betrifft.

Beispielhaft kann vorgesehen sein, dass bei Abgasrohren mit einem Durchmesser von 250mm der Innendurchmesser des Umfangswandabschnitts 27 zwischen 0,5mm und 1mm kleiner ist als der Außendurchmesser des Nutgrundabschnitts 20. Dementsprechend kann vorgesehen sein, dass durch die, insbesondere fertigungsbedingte, Erwärmung des Steckrings eine thermische Expansion des Innendurchmessers des ringförmigen Umfangswandabschnitts von mindestens 0,5mm bis 1mm erfolgt. Bevorzugt entspricht die besagte Expansion und/oder Schrumpfung 0,2% bis 0,4%, besonders bevorzugt 0,3% des Innendurchmessers des ringförmigen Umfangswandabschnitts 27 im erkalteten Zustand und/oder Endzustand.

Wie aus Fig. 1e ersichtlich ist, weist der Umfangswandabschnitt 27 an seinem in der Einsteckrichtung E gelegenen freien Ende eine Einlaufschräge 30 bzw. Fase auf zur Wechselwirkung mit der Einlaufschräge 24 am freien Ende des Nutgrundabschnittes 20.

Aus Fig. 1c ist zu erkennen, dass sich die Lippendichtung 6 in radialer Richtung nach außen am Nutgrundabschnitt 20 mit ihrem radial äußeren Lippenprofil 11, genauer mit dessen Dichtlippen 12 abstützt. Entgegen der Einsteckrichtung stützt sich die Lippendichtung 6 mit ihrem ersten axialen Lippenprofil 16, genauer mit dessen Dichtlippen 18 am Steckring 3 bzw. der von dessen Nutwandabschnitt 26 gebildeten ersten Nutwand 25 ab. In die entgegengesetzte Richtung, d.h. in der Einsteckrichtung E stützt sich die Lippendichtung 6 mit ihrem zweiten axialen Lippenprofil 16, genauer mit dessen Dichtlippen 19 an der zweiten Nutwand 21 ab, genauer an der Ringschulter 22 des Rohrkörpers 3.

Die Dichtlippen 12, 18, 19 sowie die Dichtlippen 9 können im jeweiligen Lippenprofil unterschiedliche Höhen oder unterschiedliche Durchmesser aufweisen.

In Fig. 1c ist zu erkennen, dass die Rohrwandung aufgedoppelt ist bzw. im Bereich der Innenumfangsnut, genauer im Bereich des Nutgrundes gebildet wird vom Nutgrundabschnitt 20 des Rohrkörpers 2 sowie dem radial außerhalb hiervon befindlichen Umfangswandabschnitt 27 des Steckrings 3. Der Umfangswandabschnitt 27 läuft in axialer Richtung auf einen radialen Ringbund 31, der das axiale freie Ende des Umfangswandabschnittes 27 in der Einsteckrichtung E verdeckt und der in radialer Verlängerung liegt zur zweiten Nutwand 21 bzw. zur Ringschulter 22. Beim Aufstecken des Steckrings 3 auf den Rohrkörper 2, insbesondere nach Einlegen der Lippendichtung 6 erfolgt keine Scherung der Lippendichtung 6, da der Nutgrund vollständig vom Rohrköper 2 gebildet ist. Bemerkenswert ist auch die von dem Nutgrundabschnitt 20 und dem Umfangswandabschnitt 27 gebildete Labyrinthdichtung, in die etwaiges Abgas nur gelangen könnte, wenn dieses um 360° umgelenkt wird. Dass es hierzu überhaupt kommt, ist äußerst unwahrscheinlich, aufgrund der zusätzlichen axialen und radialen Lippenprofile.

Bevorzugt ist die Höhe der Lippendichtung 6, wie sie in der Fig. 1d dargestellt ist, in einem entspannten Zustand, insbesondere vor dem Einlegen in den Rohrkörper 2 und vor dem Verrasten des Steckrings 3, also in einem entspannten Zustand so ausgebildet, dass bei oder nach dem Verrasten des Steckrings 3 ein Anpressdruck zwischen der Lippendichtung 6 und der ersten Nutwand 25 sowie zwischen der Lippendichtung 6 und der zweiten Nutwand 21 erzeugt wird, sodass eine Dichtwirkung zwischen den Nutwänden 21, 25 und der Lippendichtung 6 erzeugt wird. Bevorzugt wird diese Dichtwirkung dadurch erreicht, dass die Höhe der Lippendichtung 6 in axialer Richtung, insbesondere einschließlich des ersten und/oder zweiten axialen Lippenprofils 16, 17 geringfügig größer ist als eine Höhe des Nutgrundabschnitts 20. Alternativ kann die Höhe der Lippendichtung 6 in axialer Richtung, insbesondere einschließlich des ersten und/oder zweiten axialen Lippeprofils 16, 17 geringfügig größer gewählt werden, als der Abstand zwischen der zweiten Nutwand 21 und der ersten Nutwand 25 im verrasteten Zustand des Steckrings 3 am Rohrkörper 2. Dadurch wird sichergestellt, dass spätestens nach der Aufnahme des Rohrabschnitts des weiteren Abgasrohres sowohl axial als auch radial jeweils beidseitig der Lippendichtung 6 ein Anpressdruck vorliegt, der die Dichtungswirkung der Dichtlippe 6 sicherstellt.

Insbesondere anstatt der axialen Lippenprofile und/oder des radial äußeren Lippenprofils ist es denkbar, an den entsprechenden Nutwänden bzw. am Nutgrund nach axial bzw. radial innen vorstehende Ringfortsätze vorzusehen, die die dann bevorzugt im gegenüberliegenden Bereich profilfrei ausgebildete Lippendichtung pressen bzw. elastisch deformieren.

Im Folgenden wird ein alternatives Ausführungsbeispiel eines nach dem Konzept der Erfindung ausgebildeten Abgasmuffenrohres 1 gemäß den Fig. 1a bis 2f gezeigt. Zur Vermeidung von Wiederholungen wird im Wesentlichen nur auf die Unterschiede zu dem voranstehend erläuterten Ausführungsbeispiel eingegangen. Im Hinblick auf die Gemeinsamkeiten wird auf vorstehende Figurenbeschreibung mit zugehörigen Figuren verwiesen.

Aus einer Zusammenschau der Fig. 1a, 1b, 1c, 1f und 1h ist auch der Ablauf des erfindungsgemäßen Verfahrens ersichtlich. Das Verfahren sieht vor, dass ein Kunststoff-Abgasmuffenrohr hergestellt wird, in dem von einem bevorzugt als Kunststoffspritzgussteil ausgebildeten Rohrkörper 2 mit einem endseitigen Muffenrohrabschnitt 4 eine als Lippendichtung 6 ausgebildete Ringdichtung zur dichtenden Anlage am Außenumfang des in einer Einsteckrichtung E in den Muffenrohrabschnitt 4 einsteckbaren Rohrabschnitts in einer einen von einem Nutgrundabschnitts des Rohrkörpers 20 gebildeten Nutgrund sowie in eine erste und eine zweite sich winklig dazu erstreckende Nutwand 21, 25 aufweisenden, nach radial innen offenen Innenumfangsnut aufgenommen wird, die entgegen der Einsteckrichtung E von einem koaxial zum Rohrkörper 2 angeordneten Steckring begrenzt wird, der mit dem Rohrkörper 2 verrastet wird, wobei die erste Nutwand 25 von einem ringförmigen Nutwandabschnitt 26 des Steckrings gebildet ist, wobei erfindungsgemäß der Steckring einen sich axial zum Nutwandabschnitt 26 erstreckenden, ringförmigen Umfangswandabschnitt 27 umfasst, der zur Herstellung eines Kunststoffabgasmuffenrohrs mit dem Rohrkörper 2 verrastet wird, sodass der Steckring 3 radial außerhalb des den Nutgrund bildenden Nutgrundabschnitts des Rohrkörpers angeordnet wird und sich radial außen an dem Umfangswandabschnitt des Steckrings abstützt. Wie insbesondere aus der Zusammenschau der Fig. 1a, 1b, 1c und 1h hervorgeht, ist für das Verfahren vorgesehen, dass Rastmittel 29 des Steckrings 3, insbesondere radial innen, am Umfangswandabschnitt des Steckrings 3 und Gegenrastmittel 28 des Rohrkörpers 2, insbesondere radial außen, am Nutgrundabschnitt 20 des Rohrkörpers 2 angeordnet sind und bei einem Steckvorgang des Steckrings gegenüber dem Rohrkörper 2 der Umfangswandabschnitte 27 mit dem Nutgrundabschnitt 20 verrastet wird. Dies bedeutet also, dass der Steckring 3 im Rahmen des Steckvorgangs durch eine entsprechende Relativbewegung zwischen Steckring und Rohrkörper 2 so in Steckrichtung E bewegt wird, dass die Rastmittel 29 und die Gegenrastmittel 28 miteinander verrastet werden. Dies stellt einerseits die Fixierung des Steckrings 3 sicher. Andererseits kann ein Anpressdruck zwischen der Lippendichtung 6 und dem ersten Nutgrund 25 und dem zweiten Nutgrund 21 hergestellt und damit eine Dichtwirkung zwischen der Lippendichtung 6 und dem jeweiligen Nutgrund 21, 25 hergestellt werden.

Anhand von Fig. 1b und 1h sowie in Zusammenschau mit der Fig. 1c lässt sich eine weitere besonders bevorzugte Ausgestaltung des Verfahrens erkennen. Diese sieht vor, dass zu Beginn eines Steckvorgangs des Steckrings gegenüber dem Rohrkörper zum Aufstecken des Steckrings 3 Einlaufschrägen, welche am Steckring 3 und/oder am Rohrkörper 2 ausgebildet sind ein Spiel zwischen dem Nutgrundabschnitt 20 und dem Steckring 3, insbesondere dem ringförmigen Umfangswandabschnitt 27 ausbilden. Dazu können, wie vorangehend bereits beschrieben, am axialen freien Ende des Rohrkörpers 2 radial außen am Nutgrundabschnitt 20 und/oder am axial freien Ende des Steckrings 3 radial innen am Umfangswandabschnitt 27 eine Einlaufschräge 24, 30 angeordnet sein.

Anhand der Fig. 1c wird eine weitere, bevorzugte Ausgestaltung des Verfahrens erläutert. Bei dem in der Fig. 1c dargestellten Zustand des Abgasmuffenrohres handelt es sich um einen Endzustand, bei dem der Steckring 3 einen Presssitz auf dem Rohrkörper 2 erfährt. Dazu oder dabei übt der Umfangswandabschnitt 27 einen Anpressdruck auf den Nutgrundabschnitt 20 aus. Um einerseits einen möglichst sicheren Presssitz mit hohen Anpressdrucken erreichen zu können, gleichzeitig jedoch einen einfachen und sicheren Steckvorgang zum Aufstecken des Steckrings 3 auf den Rohrkörper 2 zu ermöglichen, ist gemäß der Erfindung vorgesehen, dass der Innendurchmesser des ringförmigen Umfangswandabschnittes 27 kleiner ausgebildet ist als ein Außendurchmesser des Nutgrundabschnitts 20, insbesondere abseits der Einlaufschrägen 30, 24, wobei der Steckring 3 vor einem Steckvorgang des Steckrings 3 gegenüber dem Rohrköper 2, insbesondere fertigungsbedingt, erwärmt wird, und der Steckvorgang im erwärmten Zustand des Steckrings 3 durchgeführt wird. Die fertigungsbedingte Erwärmung kann beispielsweise durch das Spritzgießen des Steckrings 3 bereitgestellt werden. Dadurch kann zeitweise das Verhältnis zwischen Innendurchmesser des ringförmigen Umfangswandabschnitts 27 und des Außendurchmessers des Nutgrundabschnitts 30 umgekehrt werden. Diese zeitweise Umkehrung der Durchmesser fällt nach dem Erkalten des Steckrings wieder weg, sodass durch den geringer bemessenen Innendurchmesser des ringförmigen Umfangswandabschnitts ein besonders sicherer Presssitz des Steckrings 3 auf dem Oberkörper 2 gewährleistet wird. Dementsprechend sieht eine weitere vorteilhafte Ausgestaltung des Verfahrens vor, dass die, insbesondere fertigungsbedingte Erwärmung des Steckrings so erfolgt, dass im erwärmten Zustand der Innendurchmesser des ringförmigen Umfangswandabschnitts zumindest gleichgroß ist, wie ein Außendurchmesser des Nutgrundabschnitts 20, insbesondere abseits der Einlaufschrägen 24, 30. Hierdurch können zudem allgemeine Fertigungstoleranzen kompensiert werden.
Im Unterschied zu dem zuvor beschriebenen Ausführungsbeispiel weist die Lippendichtung 6 keine axialen Lippenprofile auf. Anstelle der axialen Lippenprofile sind die erste und die zweite Nutwand 25, 21 mit axial vorstehenden und in radialer Richtung beabstandeten Ringfortsätzen 32, 33 versehen, wobei die Ringfortsätze 32 der ersten Nutwand 25 in der Einsteckrichtung E weisen und die Ringfortsätze 33 entgegen der Einsteckrichtung E. Die erste und die zweite Axialseite 14, 15 der Lippendichtung 6 sind im Gegensatz zu dem zuvor erläuterten Ausführungsbeispiel nicht profiliert bzw. sind glatt ausgebildet. Der Nutgrund bzw. der Nutgrundabschnitt 20 ist radial innen glatt ausgebildet und dient vorliegend zur Anlage des radial äußeren Lippenprofils L der Lippendichtung 6.

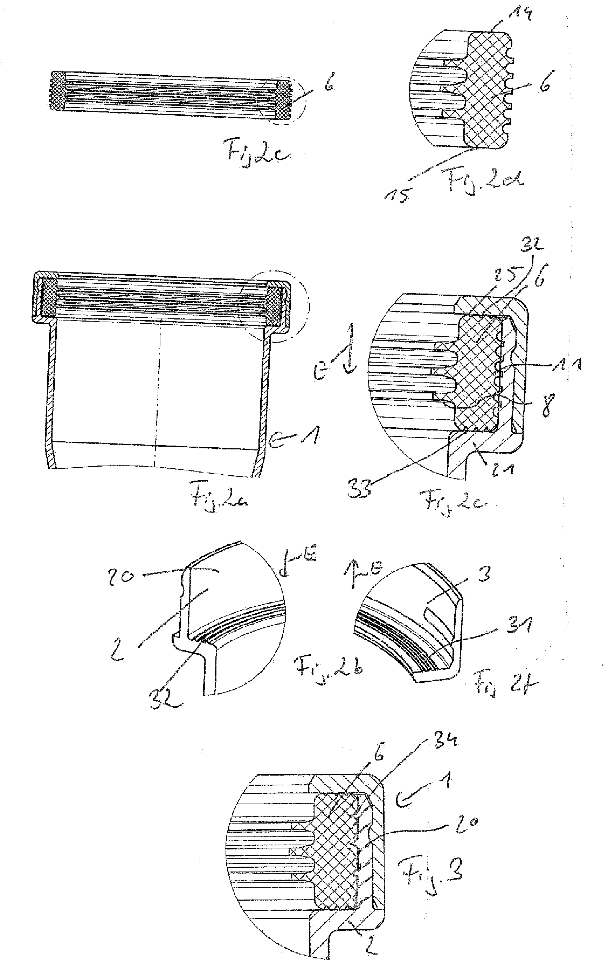

Im Folgenden wird das alternative, nach dem Konzept der Erfindung ausgebildete Abgasmuffenrohr 1 gemäß Fig. 3 beschrieben, wobei auch hier im Wesentlichen zu den Unterschieden zu dem vorangehenden Ausführungsbeispielen Bezug genommen wird. Im Hinblick auf die Gemeinsamkeiten wird auf die vorstehende Figurenbeschreibung mit zugehörigen Figuren verwiesen.

Im Unterschied zu dem Ausführungsbeispiel gemäß den Fig. 2a bis 2f ist der Nutgrundabschnitt 20 des Rohrkörpers 2 mit nach radial innen vorstehenden Ringfortsätzen 34 versehen, wobei mehrere Ringfortsätze 34 in axialer Richtung beabstandet sind und sich in radialer Richtung nach innen verjüngen und so die Lippendichtung 6 pressen bzw. deformieren. Die Lippendichtung 6 ist auf ihre Außenseite 10 profilfrei ausgestaltet. Vorliegend sind die Axialseiten analog zu dem Ausführungsbeispiel gemäß Fig. 2a bis 2f ausgebildet und wirken mit axialen Ringfortsätzen 32, 33 zusammen. Alternativ ist es denkbar, zumindest im Bereich einer der Axialseiten, insbesondere an beiden Axialseiten ein axiales Lippenprofil analog zu den Fig. 1a bis 1g vorzusehen.

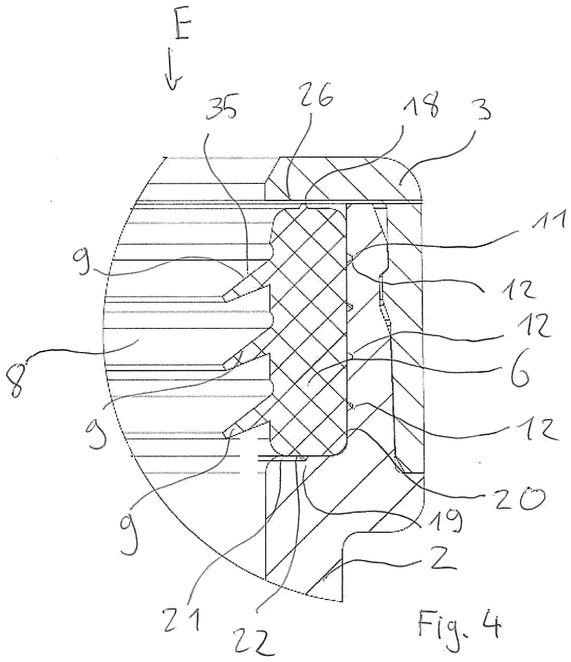

Die Fig. 4 zeigt eine weitere, nach dem Konzept der Erfindung ausgebildete Ausgestaltung einer Lippendichtung 6. Auch die Lippendichtung 6 der Fig. 4 weist in radialer Richtung nach außen ein Lippenprofil 11 auf, mit deren Dichtlippen 12 ein Abstützen am Nutgrundabschnitt 20 des Rohrkörpers 2 erfolgt. Ebenfalls umfasst die Lippendichtung 6 eine erste axiale Dichtlippe 18 zur Abdichtung zwischen dem Nutwandabschnitt 26 des Steckrings 3. Auch in entgegengesetzter Richtung, also in der Einsteckrichtung E, stützt sich die Lippendichtung 6 mit einer zweiten axialen Dichtlippe 19 an der zweiten Nutwand 21, genauer an der Ringschulter 22 des Rohrkörpers 2 ab. Darüber hinaus umfasst die Lippendichtung 6 eine auf einer radial nach innen weisende Innenseite 7 ein inneres Lippenprofil 8 auf. Die Dichtlippen 9 des Lippenprofils 8, welche ebenfalls als drei umfangsgeschlossene, ringförmige Dichtlippen 9 ausgebildet sind, verlaufen jedoch nicht, wie beispielsweise in den Fig. 1d oder 2d gezeigt radial nach innen, sondern weisen sowohl eine Erstreckung in radialer Richtung als auch eine Erstreckung in der Einsteckrichtung E auf. Die so geneigten Dichtlippen 9 des Lippenprofils 8 ermöglichen ein einfaches Aufnehmen eines Rohrabschnitts eines weiteren Abgasrohres. Außerdem ermöglicht die sowohl zur Einsteckrichtung als auch zum Radius schräg ausgebildete Anordnung der Dichtlippen 9 eine besonders effektive Dichtwirkung zwischen der Lippendichtung 6 und dem aufzunehmenden Rohrabschnitt eines weiteren Abgasrohres, da bei der Aufnahme des Rohrabschnitts des weiteren Abgasrohres die Dichtlippen 9 weiter in die Einsteckrichtung E verformt werden, und somit ein jeweils längerer Abschnitt der abdichtenden Flanke 35 der Dichtlippe 9 mit dem Rohrabschnitt des weiteren Abgasrohres zur Anlage kommt.

### Bezugszeichenliste

- 1: Abgasmuffenrohr
- 2: Rohrkörper
- 3: Steckring
- 4: Muffenabschnitt
- 5: Innenumfangsnut
- 6: Lippendichtung
- 7: Innenseite
- 8: inneres Lippenprofil
- 9: Dichtlippen des inneren Lippenprofils
- 10: Außenseite
- 11: äußeres Lippenprofil
- 12: Dichtlippen des radial äußeren Lippenprofils
- 13: Nutgrund der Innenumfangsnut
- 14: erste Axialseite der Lippendichtung
- 15: zweite Axialseite der Lippendichtung
- 16: erstes axiales Lippenprofil
- 17: zweites axiales Lippenprofil
- 18: Dichtlippen des ersten axialen Lippenprofils
- 19: Dichtlippen des zweiten axialen Lippenprofils
- 20: Nutgrundabschnitt des Rohrkörpers
- 21: zweite Nutwand
- 22: Ringschulter
- 23: Anlageabschnitt
- 24: Einlaufschräge am Nutgrundabschnitt
- 25: erste Nutwand
- 26: Nutwandabschnitt des Steckrings
- 27: Umfangswandabschnitt
- 28: Gegenrastmittel
- 29: Rastmittel
- 30: Einlaufschräge an Umfangswandabschnitt
- 31: Ringbund
- 32: axiale Ringfortsätze
- 33: axiale Ringfortsätze
- 34: radiale Ringfortsätze
- 35: Flanke der Dichtlippen 9

- E: Einsteckrichtung

## Patentansprüche

1. Kunststoff-Abgasmuffenrohr für die Abgasführung von Gebäudeheizungen, mit einem, bevorzugt als Kunststoffspritzgussteil ausgebildeten, Rohrkörper (2) und einem endseitigen Muffenabschnitt (4) zur Aufnahme eines Rohrabschnittes eines weiteren Abgasrohres zur Herstellung einer Abgasmuffenrohrverbindung, wobei in dem Muffenabschnitt (4) eine als Lippendichtung (6) ausgebildete Ringdichtung zur dichtenden Anlage am Außenumfang des in einer Einsteckrichtung (E) in den Muffenabschnitt (4) einsteckbaren Rohrabschnittes in einer einen von einem Nutgrundabschnitt des Rohrkörpers (20) gebildeten Nutgrund sowie eine erste und eine zweite sich winklig dazu erstreckende Nutwand (21, 25) aufweisenden, nach radial innen offenen Innenumfangsnut (5) aufgenommen ist, die entgegen der Einsteckrichtung (E) von einem koaxial zum Rohrkörper (2) angeordneten Steckring (3) begrenzt ist, der mit dem Rohrkörper (2) verrastet ist, wobei die erste Nutwand (25) von einem ringförmigen Nutwandabschnitt (26) des Steckrings (3) gebildet ist, wobei der Steckring (3) einen sich axial zum Nutwandabschnitt (26) erstreckenden, ringförmigen Umfangswandabschnitt (27) umfasst, der bei mit dem Rohrkörper (2) verrastetem Steckring (3) radial außerhalb des den Nutgrund bildenden Nutgrundabschnitt (20) des Rohrkörpers angeordnet ist, der sich radial außen an dem Umfangswandabschnitt (27) des Steckrings 3 abstützt, wobei Rastmittel (29) des Steckrings (3), insbesondere radial innen, am Umfangswandabschnitt des Steckrings (3) und Gegenrastmittel (28) des Rohrkörpers (2), insbesondere radial außen, am Nutgrundabschnitt (20) des Rohrkörpers (2) angeordnet sind und wobei der Umfangswandabschnitt (27) mit dem Nutgrundabschnitt (20) verrastbar, insbesondere verrastet, ist
**dadurch gekennzeichnet,**
**dass** ein Innendurchmesser des ringförmigen Umfangswandabschnitt (27) kleiner ist als ein Außendurchmesser des Nutgrundabschnitts (20), um ein Presssitz in verrastetem Zustand zu realisieren, wobei der Steckring (3) vor einem Steckvorgang des Steckrings (3) gegenüber dem Rohrkörper (2), insbesondere fertigungsbedingt, erwärmbar ist und der Steckvorgang im erwärmten Zustand durchgeführt werden kann, so dass im verrasteten Zustand ein Presssitz zwischen dem Steckring und dem Rohrkörper im Bereich des Nutgrundabschnitts mit einer möglichst hohen Anpresskraft im erkalteten Zustand realisiert wird.

2. Abgasmuffenrohr nach Anspruch 1,
**dadurch gekennzeichnet,**
**dass** am axialen freien Ende des Rohrkörpers (2) radial außen am Nutgrundabschnitt und/oder am axialen freien Ende des Steckrings (3) radial innen am Umfangswandabschnitt (27) eine Einlaufschräge (30, 24) zum Erleichtern des Steckvorgangs zum Aufstecken des Steckrings (3) auf den Rohrabschnitt ausgebildet sind/ist, insbesondere wobei der genannte Innendurchmesser des ringförmigen Umfangswandabschnitts (20) abseits der Einlaufschrägen (30, 24) kleiner als der genannte Außendurchmesser des Nutgrundabschnitts (20) ist.

3. Abgasmuffenrohr nach einem der vorhergehenden Ansprüche,
**dadurch gekennzeichnet,**
**dass** die Innenumfangsnut (5) in der Einsteckrichtung (E) begrenzt ist von einer inneren, die zweite Nutwand (21) bildenden Ringschulter (22) des Rohrkörpers (2).

4. Abgasmuffenrohr nach einem der vorhergehenden Ansprüche,
**dadurch gekennzeichnet,**
**dass** sich der Umfangswandabschnitt (27) des Steckrings (3) axial in der Einsteckrichtung (E), zumindest näherungsweise, bis zum axial nicht freien Ende des Nutgrundabschnittes (20) des Rohrkörpers (2) erstreckt.

5. Abgasmuffenrohr nach einem der vorhergehenden Ansprüche,
**dadurch gekennzeichnet,**
**dass** im Bereich des nicht freien axialen Endes des Nutgrundabschnittes (20) ein nach radial außen vorstehender Ringbund (31) am Rohrkörper (2) ausgebildet ist, der sich bevorzugt nach radial außen bis zu einer radial äußeren Mantelfläche des Umfangswandabschnittes (27) des Steckrings (3) erstreckt.

6. Abgasmuffenrohr nach einem der vorhergehenden Ansprüche,
**dadurch gekennzeichnet,**
**dass** die Lippendichtung (6) aus einem Heizungsabgaskondensatbeständigen Elastomermaterial ausgebildet ist.

7. Heizungssystem, umfassend eine Gebäudeheizung, insbesondere eine Gasheizung und ein daran angeschlossenes Abgasrohrsystem zur Abgasführung, wobei das Abgasrohrsystem mindestens ein Kunststoff-Abgasmuffenrohr (1) nach einem der vorhergehenden Ansprüche umfasst sowie ein in den Muffenrohrabschnitt des Kunststoff-Abgasmuffenrohres (1) eingeschobenes Abgasrohr, an dessen äußerer Mantelfläche die Lippendichtung (6) des Kunststoff-Abgasmuffenrohres (1), insbesondere mit einem inneren Lippenprofil (8), dichtend anliegt.

8. Verfahren zur Herstellung eines Kunststoff-Abgasmuffenrohrs für die Abgasführung von Gebäudeheizungen, mit einem, bevorzugt als Kunststoffspritzgussteil ausgebildeten, Rohrkörper (2) und einem endseitigen Muffenabschnitt (4) zur Aufnahme eines Rohrabschnittes eines weiteren Abgasrohres zur Herstellung einer Abgasmuffenrohrverbindung, wobei in dem Muffenabschnitt (4) eine als Lippendichtung (6) ausgebildete Ringdichtung zur dichtenden Anlage am Außenumfang des in einer Einsteckrichtung (E) in den Muffenabschnitt (4) einsteckbaren Rohrabschnittes in einer einen von einem Nutgrundabschnitt des Rohrkörpers (20) gebildeten Nutgrund sowie eine erste und eine zweite sich winklig dazu erstreckende Nutwand (21, 25) aufweisenden, nach radial innen offenen Innenumfangsnut (5) aufgenommen wird, die entgegen der Einsteckrichtung (E) von einem koaxial zum Rohrkörper (2) angeordneten Steckring (3) begrenzt wird, der mit dem Rohrkörper (2) verrastet wird, wobei die erste Nutwand (25) von einem ringförmigen Nutwandabschnitt (26) des Steckrings (3) gebildet ist, wobei der Steckring (3) einen sich axial zum Nutwandabschnitt (26) erstreckenden, ringförmigen Umfangswandabschnitt (27) umfasst, der zur Herstellung eines Kunststoff-Abgasmuffenrohr mit dem Rohrkörper (2) verrastet wird, so dass der Steckring (3) radial außerhalb des den Nutgrund bildenden Nutgrundabschnitt (20) des Rohrkörpers angeordnet wird und sich radial außen an dem Umfangswandabschnitt (27) des Steckrings (3) abstützt, wobei Rastmittel (29) des Steckrings (3), insbesondere radial innen, am Umfangswandabschnitt des Steckrings (3) und Gegenrastmittel (28) des Rohrkörpers (2), insbesondere radial außen, am Nutgrundabschnitt (20) des Rohrkörpers (2) angeordnet sind und wobei der Umfangswandabschnitt (27) mit dem Nutgrundabschnitt (20) verrastet, wird
**dadurch gekennzeichnet,**
**dass** ein Innendurchmesser des ringförmigen Umfangswandabschnitts (27) kleiner ist als ein Außendurchmesser des Nutgrundabschnitts (20), um ein Presssitz in verrastetem Zustand zu realisieren, wobei der Steckring (3) vor einem Steckvorgang des Steckrings (3) gegenüber dem Rohrkörper (2), insbesondere fertigungsbedingt, erwärmt wird und der Steckvorgang im erwärmten Zustand durchgeführt wird.

9. Verfahren nach anspruch 8, **dadurch gekennzeichnet,**
**dass** am axialen freien Ende des Rohrkörpers (2) radial außen am Nutgrundabschnitt und/oder am axialen freien Ende des Steckrings (3) radial innen am Umfangswandabschnitt (27) eine Einlaufschräge (30) angeordnet ist/sind, sodass zu Beginn eines Steckvorgang des Steckrings (3) gegenüber dem Rohrkörper (2) zum Aufstecken des Steckrings (3) die Einlaufschräge(n) ein Spiel zwischen Nutgrundabschnitt und Steckring, insbesondere ringförmigen Umfangswandabschnitt (27), ausbilden, insbesondere wobei der genannte Innendurchmesser des ringförmigen Umfangswandabschnitts (20) abseits der Einlaufschrägen (30, 24) kleiner als der genannte Außendurchmesser des Nutgrundabschnitts (20) ist.

## Claims

1. A plastic exhaust gas sleeve for the exhaust gas routing of building heating systems, comprising a tubular body (2), preferably realized as a plastic injection-molded part, and a sleeve section (4) at its end for accommodating a tube section of an additional exhaust tube for establishing an exhaust gas sleeve connection, an annular seal realized as a lip seal (6) being accommodated in an inner circumference grove (5) in the sleeve section (4) for a sealing contact at the outer circumference of the tube section which can be inserted into the sleeve section (4) in an insertion direction (E), said inner circumference groove (5) being open to the radial inside and having a groove base realized by a groove base section of the tubular body (2) and having a first and a second groove wall (21, 25) extending in an angular manner, said inner circumference groove (5) being limited by an insertion ring (3) which is disposed in a coaxial manner in relation to the tubular body (2) and which is interlocked with the tubular body (2), the first groove wall (25) being realized by an annular groove wall section (26) of the insertion ring (3), the insertion ring (3) comprising an annular circumference wall section (27) which extends in an axial manner in relation to the groove wall section (26) and which is disposed radially outside the groove base section (20) of the tubular body which realizes the groove base when the insertion ring (3) is interlocked with the tubular body (2), said groove base section (20) being supported by the circumference wall section (27) of the insertion ring (3) on the radial outside,
locking means (29) of the insertion ring (3) being disposed at the circumference wall section of the insertion ring (3), in particular on the radial inside, and counter locking means (28) of the tubular body (2) being disposed at the groove base section (20) of the tubular body (2), in particular on the radial outside,
and the circumference wall section (27) being interlockable, in particular interlocked, with the groove base section (20), **characterized in that**
an inner diameter of the annular circumference wall section (27) is smaller than an outer diameter of the groove base section (20) in order to realize a press fit in the interlocked state, the insertion ring (3) being heatable compared to the tubular body (2), in particular due to the production process, prior to an insertion process of the insertion ring (3) and the insertion process taking place in the heated state, a press fit between the insertion ring and the tubular body thus being realized in the interlocked state in the area of the groove base section, the press fit having a maximum contact pressure in the cooled state.

2. The exhaust gas sleeve according to claim 1,
**characterized in that**
an inlet bevel (30, 24) is/are realized at the axial free end of the tubular body (2) on the radial outside of the groove base section and/or at the axial free end of the insertion ring (3) on the radial inside of the circumference wall section (27) for facilitating the insertion process for attaching the insertion ring (3) onto the tube section, in particular the aforementioned inner diameter of the annular circumference wall section (20) off the inlet bevels (30, 24) being smaller than the aforementioned outer diameter of the groove base section (20).

3. The exhaust gas sleeve according to any one of the preceding claims,
**characterized in that**
the inner circumference groove (5) is limited in the insertion direction (E) by an inner annular shoulder (22) of the tubular body (2) which realizes the second groove wall (21).

4. The exhaust gas sleeve according to any one of the preceding claims,
**characterized in that**
the circumference wall section (27) of the insertion ring (3) extends axially in the insertion direction (E), at least approximately, to the axial unfree end of the groove base section (20) of the tubular body (2).

5. The exhaust gas sleeve according to any one of the preceding claims,
**characterized in that**
an annular collar (31) which protrudes radially outwards is realized at the tubular body (2) in the area of the unfree axial end of the groove base section (20), the annular collar (31) extending preferably radially outwards to a radially outer lateral surface of the circumference wall section (27) of the insertion ring (3).

6. The exhaust gas sleeve according to any one of the preceding claims,
**characterized in that**
the lip seal (6) is made of an elastomer material which is resistant to heating exhaust gas condensate.

7. A heating system comprising a building heating system, in particular a gas heating and an exhaust gas tube system for the exhaust gas routing connected thereto, the exhaust gas tube system comprising at least one plastic exhaust gas sleeve (1) according to any one of the preceding claims and an exhaust gas sleeve inserted into the sleeve section of the plastic exhaust gas sleeve (1), the lip seal (6) of the plastic exhaust gas sleeve (1) contacting the outer lateral surface of the exhaust gas tube, in particular with an inner lip profile (8), in a sealing manner.

8. A method for manufacturing a plastic exhaust gas sleeve for the exhaust gas routing of building heating systems comprising a tubular body (2), preferably realized as a plastic injection-molded part, and a sleeve section (4) at its end for accommodating a tube section of an additional exhaust tube for establishing an exhaust gas sleeve connection, an annular seal realized as a lip seal (6) being accommodated in an inner circumference groove (5) in the sleeve section (4) for a sealing contact at the outer circumference of the tube section which can be inserted into the sleeve section (4) in an insertion direction (E), said inner circumference groove (5) being open to the radial inside and having a groove base realized by a groove base section of the tubular body (2) and a first and a second groove wall (21, 25) extending in an angular manner, said inner circumference groove (5) being limited by an insertion ring (3) which is disposed in a coaxial manner in relation to the tubular body (2) and which is interlocked with the tubular body (2), the first groove wall (25) being realized by an annular groove wall section (26) of the insertion ring (3), the insertion ring (3) comprising an annular circumference wall section (27) which is interlocked with the tubular body (2) for manufacturing a plastic exhaust gas sleeve, the insertion ring (3) thus being disposed radially outside the groove base section (20) of the tubular body which realizes the groove base and being supported by the circumference wall section (27) of the insertion ring (3) on the radial outside,
locking means (29) of the insertion ring (3) being disposed at the circumference wall section of the insertion ring (3), in particular on the radial inside, and counter locking means (28) of the tubular body (2) being disposed at the groove base section (20) of the tubular body (2), in particular on the radial outside,
and the circumference wall section (27) being interlocked with the groove base section (20),
**characterized in that**
an inner diameter of the annular circumference wall section (27) is smaller than an outer diameter of the groove base section (20) in order to realize a press fit in the interlocked state, the insertion ring (3) being heated compared to the tubular body (2), in particular due to the production process, prior to an insertion process of the insertion ring (3) and the insertion process taking place in the heated state.

9. The method according to claim 8,
**characterized in that**
an inlet bevel (30) is/are realized at the axial free end of the tubular body (2) on the radial outside of the groove base section and/or at the axial free end of the insertion ring (3) on the radial inside of the circumference wall section (27) the inlet bevel(s) thus realizing a clearance between the groove base section and the insertion ring, in particular the annular circumference wall section (27), at the beginning of the insertion process of the insertion ring (3) in relation to the tubular body (2) for attaching the insertion ring (3), in particular the aforementioned inner diameter of the annular circumference wall section (20) off the inlet bevels (30, 24) being smaller than the aforementioned outer diameter of the groove base section (20).

## Revendications

1. Tuyau à manchons d'échappement en matière plastique pour l'évacuation des gaz d'échappement des chauffages des bâtiments comprenant un corps tubulaire (2), de préférence réalisé comme pièce moulée par injection en matière plastique, et comprenant une partie de manchon (4) à l'extrémité pour loger une partie de tuyau d'un autre tuyau d'échappement afin d'établir un raccord de tuyaux à manchons d'échappement, un joint annulaire réalisé comme joint à lèvres (6) étant logé dans une rainure de circonférence intérieure (5) dans la partie de manchon (4) pour un contact de manière étanche sur la circonférence extérieure de la partie de tuyau qui peut être insérée dans la partie de manchon (4) dans une direction d'insertion (E), ladite rainure de circonférence intérieure (5) étant ouverte vers l'intérieur radial et ayant un fond de rainure réalisé par une partie de fond de rainure du corps tubulaire (20) et une première et une deuxième paroi de rainure (21, 25) qui s'étendent de manière angulaire, ladite rainure de circonférence intérieure (5) étant limitée dans la direction opposée à la direction d'insertion (E) par un anneau d'insertion (3) qui est disposé de manière coaxiale par rapport au corps tubulaire (2), ledit anneau d'insertion étant enclenché avec le corps tubulaire (2), la première paroi de rainure (25) étant réalisée par une partie annulaire de paroi de rainure (26) de l'anneau d'insertion (3), l'anneau d'insertion (3) comprenant une partie annulaire de paroi circonférentielle (27) qui s'étend de manière axiale par rapport à la partie de paroi de rainure (26) et qui est disposée à l'extérieur radial de la partie de fond de rainure (20) du corps tubulaire qui réalise le fond de rainure quand l'anneau d'insertion (3) est enclenché avec le corps tubulaire (2), ladite partie de fond de rainure (20) étant supportée sur la partie de paroi circonférentielle (27) de l'anneau d'insertion (3) à l'extérieur radial,
des moyens d'encliquetage (29) de l'anneau d'insertion (3) étant disposés sur la partie de paroi circonférentielle de l'anneau d'insertion (3), notamment à l'intérieur radial, et des moyens de contre-encliquetage (28) du corps tubulaire (2) étant disposés sur la partie de fond de rainure (20) du corps tubulaire (2), notamment à l'extérieur radial,
la partie de paroi circonférentielle (27) pouvant être enclenchée, notamment étant enclenchée, avec la partie de fond de rainure (20),
**caractérisé en ce**
**qu'**un diamètre intérieur de la partie annulaire de paroi circonférentielle (27) est plus petit qu'un diamètre extérieur de la partie de fond de rainure (20) afin de réaliser un ajustement serré dans l'état enclenché, l'anneau d'insertion (3) pouvant être chauffé par rapport au corps tubulaire (2), notamment à cause de la fabrication, avant une opération d'insertion de l'anneau d'insertion (3)
et **que** l'opération d'insertion est réalisée dans l'état chauffé- par conséquent, un ajustement serré entre l'anneau d'insertion et le corps tubulaire est réalisé dans l'état enclenché dans la zone de la partie de fond de rainure comprenant une force de pression maximale dans l'état refroidi.

2. Tuyau à manchons d'échappement selon la revendication 1,
**caractérisé en ce**
**qu'**un biseau d'entrée (30, 24) est/sont réalisé(s) sur l'extrémité axiale libre du corps tubulaire (2) à l'extérieur radial sur la partie de fond de rainure et/ou sur l'extrémité axiale libre de l'anneau d'insertion (3) à l'intérieur radial sur la partie de paroi circonférentielle (27) afin de faciliter l'opération d'insertion pour insérer l'anneau d'insertion (3) sur la partie de tuyau, notamment ledit diamètre intérieur de la partie annulaire de paroi circonférentielle (27) à l'écart des biseaux d'entrée (30, 24) étant plus petit que ledit diamètre extérieur de la partie de fond de rainure (20).

3. Tuyau à manchons d'échappement selon l'une quelconque des revendications précédentes,
**caractérisé en ce que**
la rainure de circonférence intérieure (5) est limitée dans la direction d'insertion (E) par un épaulement annulaire (22) intérieur du corps tubulaire (2) qui réalise la deuxième paroi de rainure (21).

4. Tuyau à manchons d'échappement selon l'une quelconque des revendications précédentes,
**caractérisé en ce que**
la partie de paroi circonférentielle (27) de l'anneau d'insertion (3) s'étend axialement dans la direction d'insertion (E), au moins approximativement, à l'extrémité axiale pas libre de la partie de fond de rainure (20) du corps tubulaire (2).

5. Tuyau à manchons d'échappement selon l'une quelconque des revendications précédentes,
**caractérisé en ce**
**qu'**une collerette annulaire (31) qui fait saillie vers l'extérieur radial est réalisé sur le corps tubulaire (2) dans la zone de l'extrémité axiale pas libre de la partie de fond de rainure (20), ladite collerette annulaire (31) s'étendant de préférence vers l'extérieur radial à une surface latérale à l'extérieur radial de la partie de paroi circonférentielle (27) de l'anneau d'insertion (3).

6. Tuyau à manchons d'échappement selon l'une quelconque des revendications précédentes,
**caractérisé en ce que**
le joint à lèvres (6) est réalisé en matière élastomère qui est résistante à un condensat de gaz d'échappement de chauffage.

7. Système de chauffage, comprenant un chauffage de bâtiment, notamment un chauffage au gaz et une tuyauterie d'échappement qui est reliée audit chauffage au gaz pour évacuer les gaz d'échappement, la tuyauterie d'échappement comprenant au moins un tuyau à manchons d'échappement en matière plastique (1) selon l'une quelconque des revendications précédentes et un tuyau d'échappement qui est inséré dans la partie de tuyau à manchons du tuyau à manchons d'échappement en matière plastique (1), le joint à lèvres (6) du tuyau à manchons d'échappement en matière plastique (1) étant en contact étanche, notamment avec un profil à lèvres (8) intérieur, sur la surface latérale extérieure.

8. Procédé de fabrication d'un tuyau à manchons d'échappement en matière plastique pour l'évacuation des gaz d'échappement comprenant un corps tubulaire (2), de préférence réalisé comme pièce moulée par injection en matière plastique, et comprenant une partie de manchon (4) à l'extrémité pour loger une partie de tuyau d'un autre tuyau d'échappement afin d'établir un raccord de tuyaux à manchons d'échappement, un joint annulaire réalisé comme joint à lèvres (6) étant logé dans une rainure de circonférence intérieure (5) dans la partie de manchon (4) pour un contact de manière étanche sur la circonférence extérieure de la partie de tuyau qui peut être insérée dans la partie de manchon (4) dans une direction d'insertion (E) qui est ouverte vers l'intérieur radial et qui a un fond de rainure réalisé par une partie de fond de rainure du corps tubulaire (20) et une première et une deuxième paroi de rainure (21, 25) qui s'étendent de manière angulaire, ladite rainure de circonférence intérieure (5) étant limitée dans la direction opposée à la direction d'insertion (E) par un anneau d'insertion (3) qui est disposé de manière coaxiale par rapport au corps tubulaire (2), ledit anneau d'insertion étant enclenché avec le corps tubulaire (2), la première paroi de rainure (25) étant réalisée par une partie annulaire de paroi de rainure (26) de l'anneau d'insertion (3), l'anneau d'insertion (3) comprenant une partie annulaire de paroi circonférentielle (27) qui s'étend de manière axiale par rapport à la partie de paroi de rainure (26) qui est enclenché avec le corps tubulaire (2) afin de fabriquer un tuyau à manchons d'échappement en matière plastique, l'anneau d'insertion (3) étant disposé à l'extérieur radial de la partie de fond de rainure (20) du corps tubulaire qui réalise le fond de rainure et étant supporté sur la partie de paroi circonférentielle (27) de l'anneau d'insertion (3) à l'extérieur radial,
des moyens d'encliquetage (29) de l'anneau d'insertion (3) étant disposés sur la partie de paroi circonférentielle de l'anneau d'insertion (3), notamment à l'intérieur radial, et des moyens de contre-encliquetage (28) du corps tubulaire (2) étant disposés sur la partie de fond de rainure (20) du corps tubulaire (2), notamment à l'extérieur radial,
la partie de paroi circonférentielle (27) étant enclenchée avec la partie de fond de rainure (20),
**caractérisé en ce**
**qu'**un diamètre intérieur de la partie annulaire de paroi circonférentielle (27) est plus petit qu'un diamètre extérieur de la partie de fond de rainure (20) afin de réaliser un ajustement serré dans l'état enclenché, l'anneau d'insertion (3) étant chauffé par rapport au corps tubulaire (2), notamment à cause de la fabrication, avant une opération d'insertion de l'anneau d'insertion (3)
et **que** l'opération d'insertion est réalisée dans l'état chauffé.

9. Procédé selon la revendication 8,
**caractérisé en ce**
**qu'**un biseau d'entrée (30, 24) est/sont réalisé(s) sur l'extrémité axiale libre du corps tubulaire (2) à l'extérieur radial sur la partie de fond de rainure et/ou sur l'extrémité axiale libre de l'anneau d'insertion (3) à l'intérieur radial sur la partie de paroi circonférentielle (27), les biseau(x) d'entrée réalisant un jeu entre la partie de fond de rainure et l'anneau d'insertion, notamment la partie annulaire de paroi circonférentielle (27) au début d'une opération d'insertion de l'anneau d'insertion (3) par rapport au corps tubulaire (2) pour insérer l'anneau d'insertion (3), notamment ledit diamètre intérieur de la partie annulaire de paroi circonférentielle (27) à l'écart des biseaux d'entrée (30, 24) étant plus petit que ledit diamètre extérieur de la partie de fond de rainure (20).
